# EUROPEAN PATENT APPLICATION

(11) **EP 4 254 897 A1**
(43) Date of publication of application: **04.10.2023**
(21) Application number: 20963633.1
(22) Date of filing: 30.11.2020
(51) Int. Cl.: H04L 45/00

(54) **NETWORK NODE AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SUZUKI, Yuji, Tokyo 100-6150 (JP); ZUGENMAIER, Alf, 80335 Munich (DE)
(74) Representative: Hoffmann Eitle
(86) International application number: PCT/JP2020/044572
(87) International publication number: WO 2022/113370

(57) **Abstract**

A network node includes: a reception unit configured to receive communication from an authenticated terminal, or to receive an IP (Internet Protocol) address of a terminal from an external application; a control unit configured to assign a temporary identifier for uniquely identifying the terminal in an external interface, based on the communication from the terminal or the IP address; and a transmission unit configured to transmit information indicating the temporary identifier to the terminal or to the external application.

## Description

### [FIELD OF THE INVENTION]

The present invention relates to a network node and a communication method in a communication system.

### [BACKGROUND OF THE INVENTION]

In 3GPP (3rd Generation Partnership Project), in order to achieve further larger system capacity, further faster data transmission speed, further lower latency in a wireless communication section, etc., a wireless communication method called 5G or NR (New Radio) has been discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g., non-patent document 1).

In addition, for example, an architecture has been discussed in which the Northbound interface between NEF (Network Exposure Function) and AF (Application Function) in the 5G system is formed by CAPIF (Common API Framework) (for example, Non-Patent Document 2 and Non-Patent Document 3).

### [Citation List]

### [Non-Patent Document]

[Non-Patent Document 1] 3GPP TS 23.501 V16.6.0 (2020-09)
[Non-Patent Document 2] 3GPP TS 29.522 V16.5.0 (2020-09)
[Non-Patent Document 3] 3GPP TS 23.222 V16.9.0 (2020-09)

### SUMMARY OF THE INVENTION

### [TECHNICAL PROBLEM]

Conventionally, in the Northbound interface and inside of AF in the 5G system, only a fixed identifier such as MSISDN (Mobile Subscriber Integrated Services Digital Network Number) can be used. However, there is a concern that the processing record related to the identifier is accumulated and abused.

The present invention has been developed in view of the foregoing, and is intended to improve the security related to subscriber identifiers in the network.

### [SOLUTION TO PROBLEM]

According to the disclosed technique, a network node is provided. The network node includes: a reception unit configured to receive communication from an authenticated terminal, or to receive an IP (Internet Protocol) address of a terminal from an external application; a control unit configured to assign a temporary identifier for uniquely identifying the terminal in an external interface, based on the communication from the terminal or the IP address; and a transmission unit configured to transmit information indicating the temporary identifier to the terminal or to the external application.

### [ADVANTAGEOUS EFFECTS OF INVENTION]

According to the disclosed technique, it is possible to improve the security related to subscriber identifiers in the network.

### BRIEF DESCRIPTION OF THE DRAWINGS

[Fig. 1] Fig. 1 is a drawing illustrating an example of a communication system.
[Fig. 2] Fig. 2 is a drawing illustrating an example of a communication system under a roaming environment.
[Fig. 3] Fig. 3 is a sequence diagram illustrating an example (1) of assigning an identifier in an embodiment of the present invention.
[Fig. 4] Fig. 4 is a sequence diagram illustrating an example (2) of assigning an identifier in an embodiment of the present invention.
[Fig. 5] Fig. 5 is a sequence diagram illustrating an example (3) of assigning an identifier in an embodiment of the present invention.
[Fig. 6] Fig. 6 is a sequence diagram illustrating an example (4) of assigning an identifier in an embodiment of the present invention.
[Fig. 7] Fig. 7 is a sequence diagram illustrating an example (5) of assigning an identifier in an embodiment of the present invention.
[Fig. 8] Fig. 8 is a drawing illustrating an example of a functional structure of a base station 10 in an embodiment of the present invention.
[Fig. 9] Fig. 9 is a drawing illustrating an example of a functional structure of a terminal 20 in an embodiment of the present invention.
[Fig. 10] Fig. 10 is a drawing illustrating an example of a hardware structure of the base station 10 and the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network) .

Further, in an embodiment of the present invention, the expression, radio parameters are "configured" may mean that a predetermined value is pre-configured, or may mean that a radio parameter indicated by a network node 30 or a terminal 20 is configured.

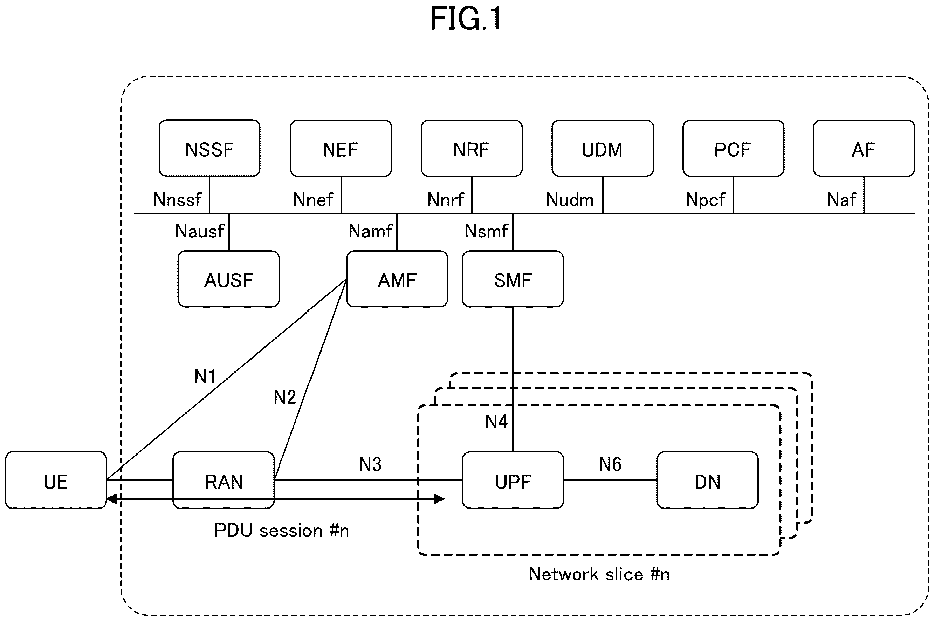

Fig. 1 is a drawing illustrating an example of a communication system. As illustrated in Fig. 1, the communication system includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN (Radio Access Network) is a network node 30 with wireless access functions, may include a base station 10, and is connected to UE, AMF (Access and Mobility Management Function) and UPF (User plane function). The AMF is a network node 30 having functions of, for example, terminating the RAN interface, terminating the NAS (Non-Access Stratum), managing registration, managing connection, managing reachability, and managing mobility. The UPF is a network node 30 interconnected with DN (Data Network), and has functions such as a PDU (Protocol Data Unit) session point to an external unit, routing and forwarding packets, and QoS (Quality of Service) handling of the user plane. UPF and DN are included in a network slice. In a wireless communication network in an embodiment of the present invention, multiple network slices are included.

AMF is connected to UE, RAN, SMF (Session Management Function), NSSF (Network Slice Selection Function), NEF (Network Exposure Function), NRF (Network Repository Function), UDM (Unified Data Management), AUSF (Authentication Server Function), PCF (Policy Control Function), and AF (Application Function). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

The SMF is a network node 30 having functions such as session management, Internet Protocol (IP) address assignment and management of UE, DHCP (Dynamic Host Configuration Protocol) function, ARP (Address Resolution Protocol) proxy, and roaming function. The NEF is a network node 30 having a function of indicating capabilities and events to other NFs (Network Functions). The NSSF is a network node 30 having functions of, for example, selecting the network slice to which the UE is to be connected, determining the allowed NSSAI (Network Slice Selection Assistance Information), determining the configured NSSAI, and determining the AMF set to which the UE is to be connected. PCF is a network node 30 having a function of performing policy control of the network. AF is a network node 30 having a function of controlling an application server. NRF is a network node 30 having a function of discovering NF instances which provide services. UDM is a network node 30 that manages subscriber data and authentication data. UDM is connected to UDR (User Data Repository) that stores the above-described data;

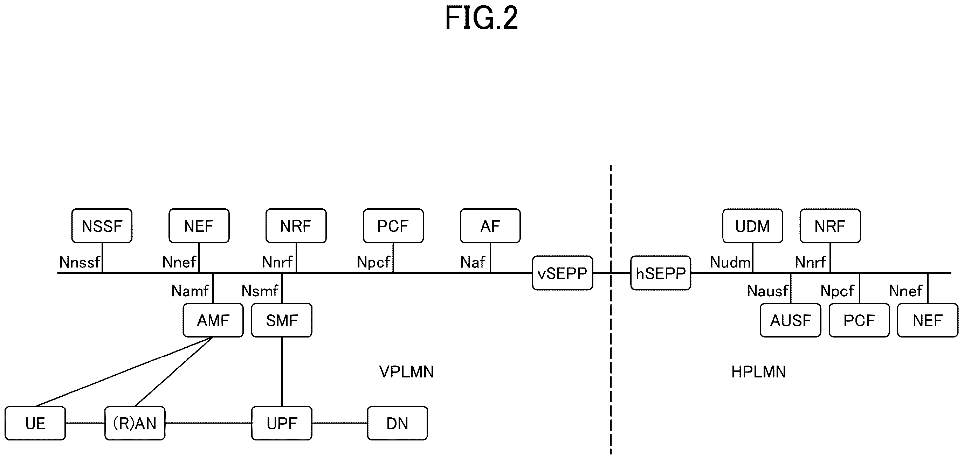

Fig. 2 is a drawing illustrating an example of a communication system under a roaming environment. As illustrated in Fig. 2, the network includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN is a network node 30 having a wireless access function, and is connected to UE, AMF and UPF. AMF is a network node 30 having functions of, for example, terminating the RAN interface, terminating NAS, managing registration, managing connection, managing reachability, and managing mobility. UPF is a network node 30 having functions of, for example, PDU session point to an external unit mutually connected to DN, routing and forwarding of packets, and QoS handling of the user plane. UPF and DN are included in a network slice. In a wireless communication network in an embodiment of the present invention, multiple network slices are included.

AMF is connected to UE, RAN, SMF, NSSF, NEF, NRF, UDM, AUSF, PCF, AF, and SEPP (Security Edge Protection Proxy). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

SMF is a network node 30 having functions such as session management, IP address assignment and management of UE, a DHCP function, an ARP proxy, and a roaming function. NEF is a network node 30 having a function of indicating capabilities and events to other NFs. NSSF is a network node 30 having functions of, for example, selecting the network slice to which the UE is to be connected, determining NSSAI to be allowed, determining NSSAI to be configured, and determining AMF set to which the UE is to be connected. PCF is a network node 30 having a function of performing policy control of the network. AF is a network node 30 having a function of controlling an application server. NRF is a network node 30 having a function of discovering NF instances which provide services. SEPP is a non-transparent proxy and filters control plane messages between PLMNs (Public Land Mobile Networks). vSEPP shown in Fig. 2 is a SEPP in a visited network, and hSEPP is a SEPP in a home network.

As shown in Fig. 2, the UE is in a roaming environment connected to RAN and AMF in VPLMN (Visited PLMN). VPLMN and HPLMN (Home PLMN) are connected via vSEPP and hSEPP. The UE can communicate with the UDM of HPLMN via, for example. The AMF of VPLMN.

With respect to the above-described NEF, implementing the API (Application Programming Interface), which can be called from the AF, by applying the CAPIF (Common API Framework) architecture, is being discussed. The CAPIF architecture provides a mechanism for supporting the service API operation, and, for example, enables the API invoker to discover the service API provided by the API provider, and enables communication using the service API. In addition, for example, the CAPIF architecture has a mechanism in which the connection topology of the PLMN trust domain is hidden from the API invoker that accesses the service API from outside the PLMN trust domain.

Here, in the Northbound interface and inside of AF in the 5G system, only a fixed identifier such as MSISDN (Mobile Subscriber Integrated Services Digital Network Number) can be used. However, there is a concern that the processing record related to the identifier is accumulated and abused. For example, there is a security problem in a case where an AF obtains MSISDN, based on the IP address.

Accordingly, a mechanism for identifying a terminal 20 without using MSISDN is required. For example, a mechanism is being discussed in which MSISDN is hidden from AF, and yet the terminal 20 accesses an API of NEF, by itself or together with AF.

Accordingly, an external temporary identifier, which is assigned by CAPIF and globally unique, may be introduced for identifying the terminal 20. For example, the name of the identifier may be NA-GUTI (Northbound Access Globally Unique Temporary Identifier). NA-GUTI may be derived, for example, as shown below, but not limited to the below.
<NA-GUTI>:=<GUCAI><NA-TMSI>
<GUCAI>:=<MCC><MNC><CAPIF identifier assigned by PLMN>
<NA-TMSI>:=<Identifier assigned by CAPIF>

GUCAI (Globally Unique CApif Id) may be a globally unique identifier for identifying CAPIF. Note that MCC (Mobile Country Code) indicates an operation area, and MNC (Mobile Network Code) indicates a communication provider.

NA-TMSI (Northbound Access Temporary Mobile Subscription Identifier) may be an identifier for temporarily identifying a subscriber in the Northbound interface.

NA-GUTI may be assigned according to the assignment procedure described below.

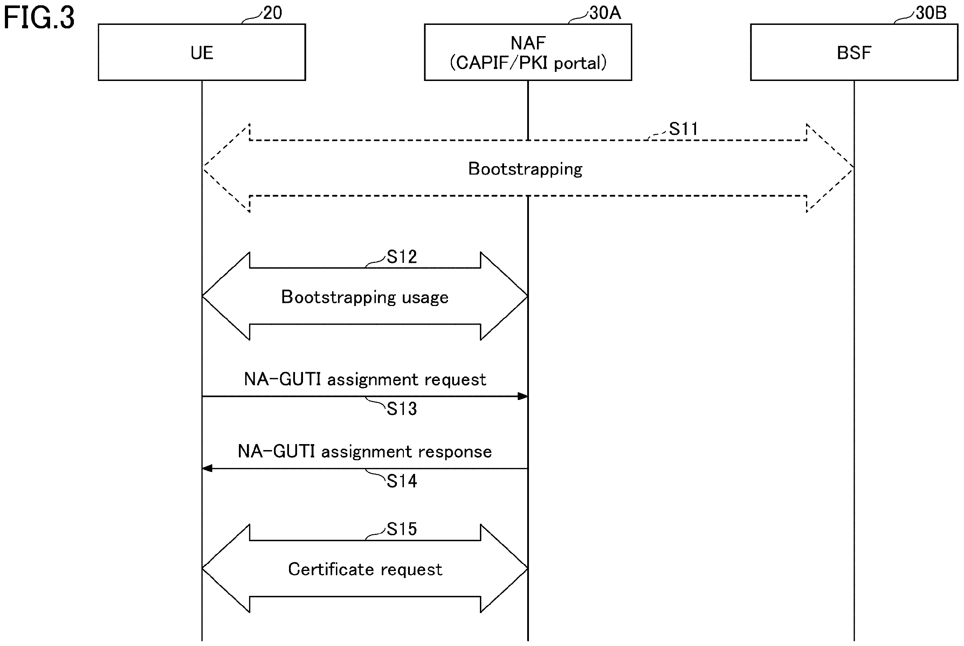

Fig. 3 is a sequence diagram illustrating an example (1) of assigning an identifier in an embodiment of the present invention. Fig. 3 is an example of NA-GUTI assignment procedure invoked by a UE 20. NAF (Network Application Function), which is a network node 30A illustrated in Fig. 3, and BSF (Bootstrapping Server Function), which is a network node 30B illustrated in Fig. 3, are network nodes in 3GPP GBA (Generic Bootstrapping Architecture) based on AKA (Authentication and Key Agreement) protocol. In Fig. 3, NAF operates as CAPIF with respect to step S13 and step S14, and operates as a PKI (Public Key Infrastructure) portal with respect to step S15. In Fig. 3, for the sake of simplicity, CAPIF and PKI are integrated as one body. Note that IP connections may be established between the UE 20, NAF and BSF.

In step S11, the UE 20 and BSF authenticate each other by Bootstrapping. The authentication is performed according to AKA protocol, and the session key after the authentication is applied between the UE 20 and BSF.

In subsequent step S12, the UE 20 transmits at least B-TID (Bootstrapping Transaction Identifier) to NAF, and derives, with NAF, a key according to the Bootstrapping usage procedure. Note that, in the Bootstrapping usage procedure, NAF transmits an authentication request to BSF, and receives an authentication response from BSF. In a case where NAF is CAPIF, BSF may also transmit SUPI of the UE 20 to NAF. After performing the Bootstrapping usage procedure, the UE 20 and NAF may establish a secure communication path by using the derived key.

In subsequent step S13, the UE 20 transmits a NA-GUTI assignment request to NAF. Regarding the NA-GUTI assignment request, NA-GUTI additional assignment, changing the request, or canceling the request, may be performed by configuring a parameter. CAPIF assigns NA-GUTI to the UE 20, based on the NA-GUTI assignment request.

In subsequent step S14, NAF transmits a NA-GUTI assignment response including at least NA-GUTI assigned by CAPIF to the UE 20. Here, CAPIF may confirm user's intention by accessing UDR, for example, before step S14. Note that NAF may transmit information indicating the assigned NA-GUTI to the external AF if necessary.

In subsequent step S15, the UE 20 transmits a certificate request to NAF. Based on the certificate request, the PKI portal issues a certificate and transmits the issued certificate to the UE 20 .

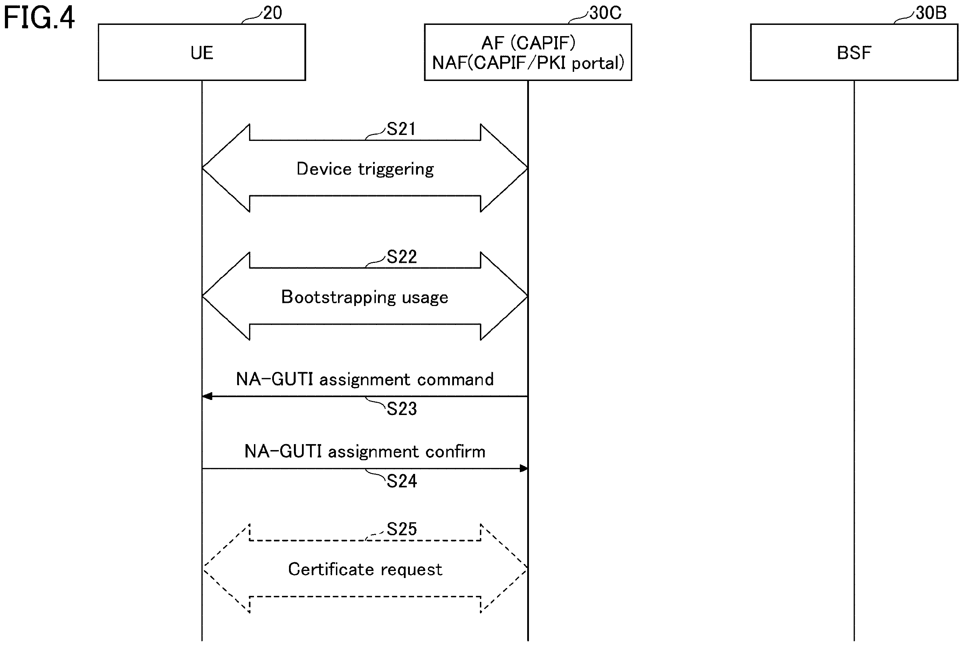

Fig. 4 is a sequence diagram illustrating an example (2) of assigning an identifier in an embodiment of the present invention. Fig. 4 is an example of NA-GUTI assignment procedure invoked by CAPIF. In Fig. 4, CAPIF operates as a normal AF with respect to step S21. Thereafter, the GBA procedure follows. NAF operates as CAPIF with respect to step S23 and step S24, and operates as a PKI portal with respect to step S15. In Fig. 4, for the sake of simplicity, CAPIF and PKI are integrated as one body. Here, CAPIF may be a CAPIF core function. Note that IP connections may be established between the UE 20, the network node 30C and the network node 30B.

In step S21, CAPIF starts the Device triggering procedure. According to the Device triggering procedure, in response to the arrival of a message (for example, SMS (Short Message Service)), the UE 20 performs an operation (for example, performs the Bootstrapping usage procedure) corresponding to the message payload. Here, CAPIF may confirm user's intention by accessing UDR, for example, before step S21.

In subsequent step S22, the UE 20 transmits at least B-TID (Bootstrapping Transaction Identifier) to NAF, and derives, with NAF, a key according to the Bootstrapping usage procedure. Note that, in the Bootstrapping usage procedure, NAF transmits an authentication request to BSF, and receives an authentication response from BSF. In a case where NAF is CAPIF, BSF may transmit SUPI of the UE 20 to NAF. After performing the Bootstrapping usage procedure, the UE 20 and NAF may establish a secure communication path by using the derived key.

In subsequent step S23, NAF transmits a NA-GUTI assignment command including at least NA-GUTI assigned by CAPIF to the UE 20. Regarding the NA-GUTI assignment request, NA-GUTI additional assignment, changing the request, or canceling the request, may be performed by configuring a parameter. Note that NAF may transmit information indicating the assigned NA-GUTI to the external AF if necessary.

In subsequent step S24, the UE 20 transmits a NA-GUTI assignment confirmation (assignment confirm) to NAF.

In subsequent step S25, the UE 20 transmits a certificate request to NAF. Based on the certificate request, the PKI portal issues a certificate and transmits the issued certificate to the UE 20.

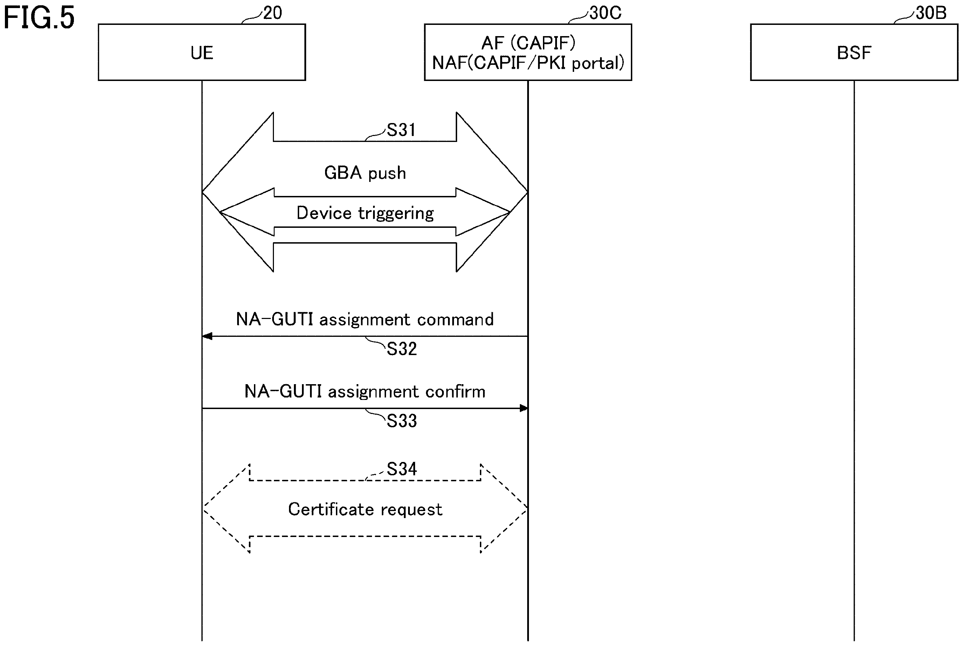

Fig. 5 is a sequence diagram illustrating an example (3) of assigning an identifier in an embodiment of the present invention. Fig. 5 is an example of NA-GUTI assignment procedure invoked by CAPIF. In Fig. 5, NAF operates as CAPIF with respect to step S31, step S32 and step S33, and operates as a PKI portal with respect to step S34. In Fig. 5, for the sake of simplicity, CAPIF and PKI are integrated as one body. In addition, CAPIF operates as a normal AF with respect to the Device Triggering procedure in step S31. Here, CAPIF may be a CAPIF core function. Note that IP connections may be established between the UE 20, the network node 30C and the network node 30B.

In step S31, CAPIF starts the GBA push procedure. According to the GBA push procedure, NAF can securely transmit a message to the UE 20. As illustrated in Fig. 5, the GBA push procedure may include the Device triggering procedure. Here, CAPIF may confirm user's intention by accessing UDR, for example, before step S31.

In subsequent step S32, NAF transmits a NA-GUTI assignment command including at least NA-GUTI assigned by CAPIF to the UE 20. Regarding the NA-GUTI assignment request, NA-GUTI additional assignment, changing the request, or canceling the request, may be performed by configuring a parameter. Note that NAF may transmit information indicating the assigned NA-GUTI to the external AF if necessary.

In subsequent step S33, the UE 20 transmits a NA-GUTI assignment confirmation (assignment confirm) to NAF.

In subsequent step S34, the UE 20 transmits a certificate request to NAF. Based on the certificate request, the PKI portal issues a certificate and transmits the issued certificate to the UE 20.

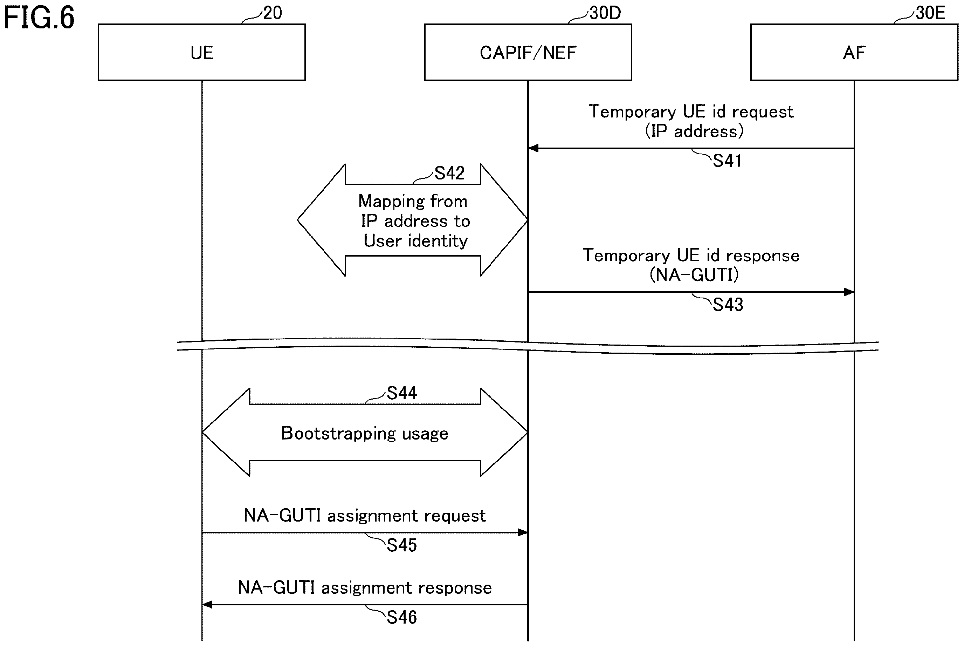

Fig. 6 is a sequence diagram illustrating an example (4) of assigning an identifier in an embodiment of the present invention. Fig. 6 is an example of NA-GUTI assignment procedure invoked by AF. In Fig. 6, the network node 30D includes CAPIF and NEF, and the network node 30E includes AF. Note that IP connections may be established between the UE 20, the network node 30D and the network node 30E.

In step S41, AF transmits, to NEF or CAPIF, a temporary UEID request (Temporary UE id request) including at least information indicating an IP address of the UE 20.

In subsequent step S42, NEF or CAPIF obtains, from the received information indicating the IP address, at least SUPI (Subscription Permanent Identifier) that is a user identifier. In step S42, CAPIF may further confirm user's intention by accessing UDR, for example. CAPIF assigns NA-GUTI corresponding to SUPI.

In subsequent step S43, NEF or CAPIF transmits, to AF, a temporary UEID response (Temporary UE id response) including at least information indicating NA-GUTI. Here, CAPIF may associate the assigned NA-GUTI with an identifier of AF, afId, to be stored. Here, CAPIF may transmit the assigned NA-GUTI and afId to the UE 20 via a secure communication path.

Thereafter, in a case where a request is generated by the UE 20, in step S44, the UE 20 transmits at least B-TID (Bootstrapping Transaction Identifier) to NAF (corresponding to CAPIF), and derives, with NAF (corresponding to CAPIF), a key according to the Bootstrapping usage procedure. Note that, in the Bootstrapping usage procedure, NAF transmits an authentication request to BSF, and receives an authentication response from BSF. In a case where NAF is CAPIF, BSF may transmit SUPI of the UE 20 to NAF. After performing the Bootstrapping usage procedure, the UE 20 and NAF may establish a secure communication path by using the derived key.

In subsequent step S45, the UE 20 transmits a NA-GUTI assignment request to CAPIF. Regarding the NA-GUTI assignment request, NA-GUTI additional assignment, changing the request, or canceling the request, may be performed by configuring a parameter.

In subsequent step S46, CAPIF transmits a NA-GUTI assignment response including at least the stored NA-GUTI corresponding to SUPI and afId to the UE 20.

Note that operations of steps from step S44 may be replaced by using the procedure illustrated in Fig. 3, Fig. 4 or Fig. 5, and CAPIF may immediately transmit NA-GUTI and afId to the UE 20.

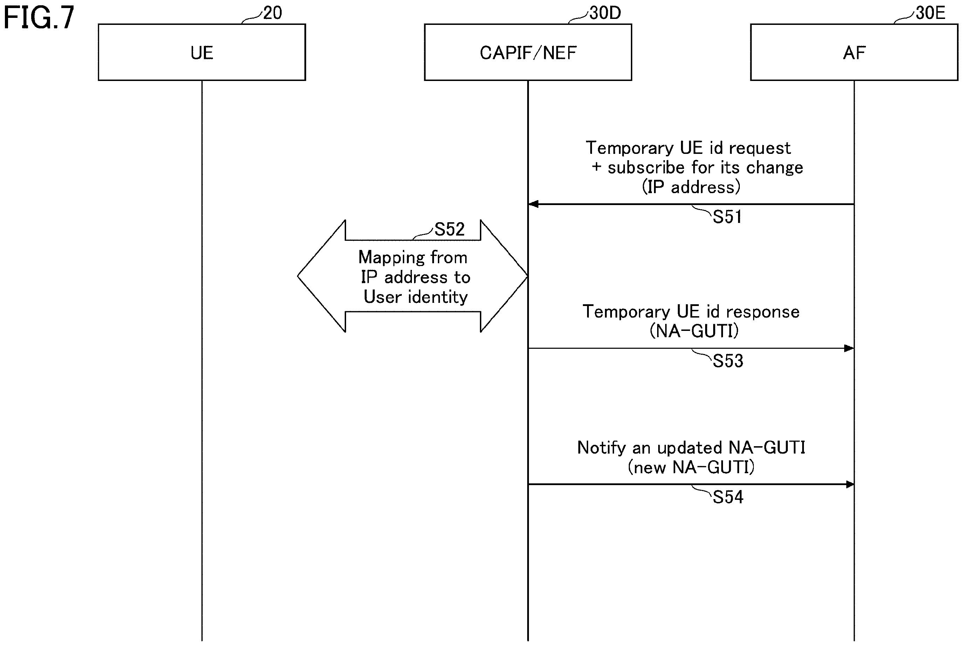

Fig. 7 is a sequence diagram illustrating an example (5) of assigning an identifier in an embodiment of the present invention. Fig. 7 is an example in which NA-GUTI is changed or canceled after the NA-GUTI assignment procedure triggered by AF. In Fig. 7, the network node 30D includes CAPIF and NEF, and the network node 30E includes AF. Note that IP connections may be established between the UE 20, the network node 30D and the network node 30E.

In step S51, AF transmits to NEF or CAPIF: a temporary UEID request (Temporary UE id request) including at least information indicating an IP address of the UE 20; and a notification request in a case where the temporary UEID is changed (subscription for its change) .

In subsequent step S52, NEF or CAPIF obtains, from the received information indicating the IP address, at least SUPI that is a user identifier. In step S42, CAPIF may further confirm user's intention by accessing UDR, for example. CAPIF assigns NA-GUTI corresponding to SUPI.

In subsequent step S53, NEF or CAPIF transmits, to AF, a temporary UEID response (Temporary UE id response) including at least information indicating NA-GUTI. Here, CAPIF may associate the assigned NA-GUTI with an identifier of AF, afId, to be stored.

In a case of changing or canceling NA-GUTI, step S54 may be performed, and NEF or CAPIF transmits an indication including a new NA-GUTI to AF. Regarding the indication, an indication of changing or canceling NA-GUTI may be available by configuring a parameter. Note that, in addition to NA-GUTI indicated in step S53, a new NA-GUTI may be indicated to AF. That is, AF is enabled to use a plurality of different NA-GUTIs.

NA-GUTI, which is assigned as described above, may be used as described in 1) to 4) below, for example.

1) After the terminal authentication at BSF, CAPIF as NAF assigns NA-GUTI to the terminal 20. The terminal 20 accesses the PKI portal as NAF, and obtains a digital certificate for NA-GUTI and its own public key.
2) In a case where the terminal 20 alone accesses NEF, the terminal 20 accesses CAPIF/NEF, which is an API external providing function (exposing function), by using the digital certificate obtained in 1). Note that, in the conventional interface of NEF API, an identifier of the originating AF is entered as afId to the resource name. The terminal 20 alone may access NEF by replacing the afId with NA-GUTI.
3) In a case where the terminal 20 together with AF accesses NEF, the terminal 20 accesses AF by using the digital certificate obtained in 1). AF may request, to CAPIF, for terminal contents confirmation. AF generates a message to be transmitted to 5GS (5G system), signs it and transmits it to the terminal 20. The terminal 20 further signs the message, and then transmits it to 5GC (5G Core Network). Here, AF may obtain NA-GUTI. For example, it is recommended that the terminal 20 is to use a different NA-GUTI for a different AF so that processing records associated with NA-GUTI are not to be stored between multiple AFs.
4) In a case of a call arrival using MSISDN, which is a service by NEF (Nnef_Trigger_Delivery), the terminal 20 indicates in advance, to AF, the obtained digital certificate including NA-GUTI (a token may be further added).

As another example, 5G-GUTI (5G Globally Unique Temporary Identifier) may be used as a globally unique external temporary identifier, in the Northbound interface and within AF. 5G-GUTI is a globally unique temporary identifier assigned by AMF. The uniqueness of 5G-GUTI depends on the uniqueness of GUAMI (Globally Unique AMF Identifier) and on the uniqueness of 5G-TMSI (5G Temporary Mobile Subscription Identifier) within AMF.

By introducing 5G-GUTI and by using 5G-GUTI with SUCI (Subscription Concealed Identifier), it becomes unnecessary to use SUPI on the wireless interface, and a concern that processing records associated with SUPI are to be accumulated and abused, is reduced. In addition, it becomes possible to identify AMF that had been accessed in the past, and it becomes possible to simplify the network configuration by taking over the network configuration from the AMF.

Note that it can be listed as an advantage of NA-GUTI as compared with 5G-GUTI that there is no influence from the OS (Operating System) function of terminals. In a case where 5G-GUTI provided by NAS is used by a terminal application, 5G-GUTI is required to be obtained via the terminal OS. However, it is often assumed that the terminal OS does not implement the 3GPP specifications.

Note that, in a case of Traffic Influence API, for example, the conventional configuration of NEF API according to 3GPP specifications is as follows. Resource URI: {apiRoot}/3gpp-traffic-influence/v1/{afId}/subscriptions A new configuration of NEF API in an embodiment of the present invention may be, for example, as follows.

| |
|---|
| Resource URI: {apiRoot}/3gpp-traffic-influence/v1/{NA-GUTI}/subscriptions |
| or |
| Resource URI: {apiRoot}/3gpp-traffic-influence/v1/{5G-GUTI}/subscriptions |

According to the above-described embodiment(s), by introducing a temporary identifier corresponding to a terminal 20 to an interface to the system outside, the network node 30 can enable an external application to access the terminal 20 without disclosing the fixed identifier to the external application.

That is, it is possible to improve the security related to subscriber identifiers in the network.

### (Apparatus configuration)

Next, a functional configuration example of the base station 10, network node 30 and the terminal 20 that perform processes and operations described above will be described. The base station 10, the network node 30 and the terminal 20 include functions for implementing the embodiments described above. It should be noted, however, that each of the base station 10, the network node 30 and the terminal 20 may include only some of the functions in the embodiments.

### <Base station 10 and network node 30>

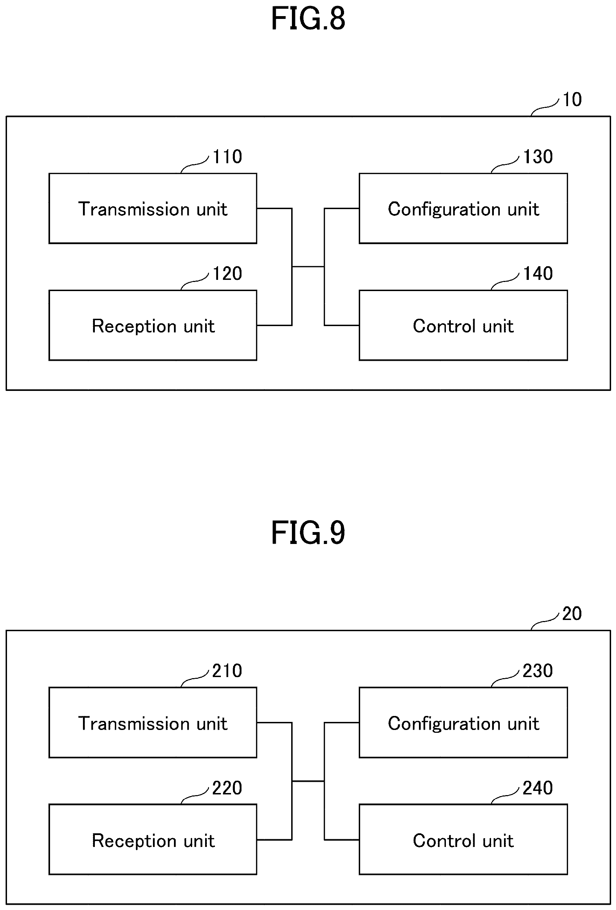

Fig. 8 is a diagram illustrating an example of a functional configuration of the base station 10. As shown in Fig. 8, the base station 10 includes a transmission unit 110, a reception unit 120, a configuration unit 130, and a control unit 140. The functional structure illustrated in Fig. 8 is merely an example. Functional divisions and names of functional units may be anything as long as operations according to an embodiment of the present invention can be performed. Note that the network node 30 may have the same functional configuration as the base station 10. In addition, the network nodes 30 having multiple different functions in the system architecture may be composed of multiple network nodes 30 separated for each function.

The transmission unit 110 includes a function for generating a signal to be transmitted to the terminal 20 or to another network node 30 and transmitting the signal in a wired manner or wireless manner. The reception unit 120 includes a function for receiving various signals transmitted from the terminal 20 or another network node 30, and for acquiring, for example, information of an upper layer from the received signals.

The configuration unit 130 stores preset configuration information and various configuration information items to be transmitted to the terminal 20 in a storage apparatus and reads the preset configuration information from the storage apparatus if necessary. The contents of the configuration information are, for example, subscriber information in the network.

The control unit 140 performs a process related to processing and authentication related to the subscriber information in the network as described in the embodiments. Further, the control unit 140 performs a process related to communications with the terminal 20. The functional units related to signal transmission in the control unit 140 may be included in the transmission unit 110, and the functional units related to signal reception in the control unit 140 may be included in the reception unit 120.

### <Terminal 20>

Fig. 9 is a diagram illustrating an example of a functional configuration of the terminal 20. As shown in FIG. 9, the terminal 20 includes a transmission unit 210, a reception unit 220, a configuration unit 230, and a control unit 240. The functional structure illustrated in Fig. 9 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function of receiving NR-PSS, NR-SSS, NR-PBCH, DL/UL control signals, or reference signals transmitted from the network node 30.

The configuration unit 230 stores various types of configuration information received from the network node 30 by the reception unit 220 in the storage device and reads the configuration information from the storage device as necessary. In addition, the configuration unit 230 stores pre-configured configuration information. The contents of the configuration information are, for example, subscriber information in the network.

The control unit 240 performs a process related to processing and authentication related to the subscriber information in the network as described in the embodiments. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 8 and Fig. 9), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

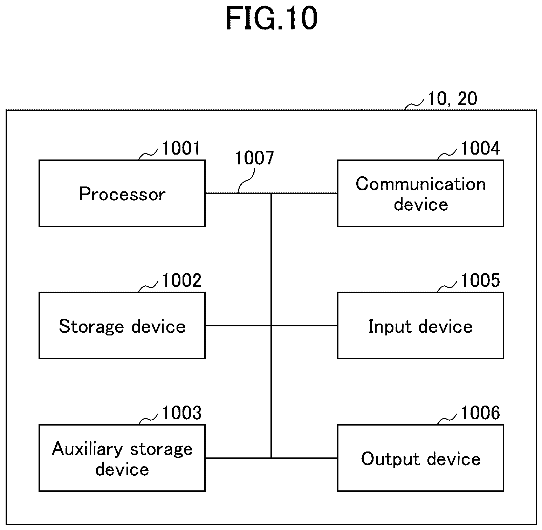

For example, the network node 30, terminal 20, etc., according to an embodiment of the present disclosure may function as a computer for processing the radio communication method of the present disclosure. Fig. 10 is a drawing illustrating an example of hardware structures of the base station 10 and terminal 20 according to an embodiment of the present invention. The network node 30 may have the same hardware configuration as the base station 10. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 8 may be realized by control programs that are stored in the storage device 1002 and are executed by the processor 1001. Further, for example, the control unit 240 of the terminal 20 illustrated in Fig. 9 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a network node is provided. The network node includes: a reception unit configured to receive communication from an authenticated terminal, or to receive an IP (Internet Protocol) address of a terminal from an external application; a control unit configured to assign a temporary identifier for uniquely identifying the terminal in an external interface, based on the communication from the terminal or the IP address; and a transmission unit configured to transmit information indicating the temporary identifier to the terminal or to the external application.

According to the above configuration, by introducing a temporary identifier corresponding to a terminal 20 in an interface to the system outside, the network node 30 can enable the terminal 20 to be managed within an external application, and enable the external application to access the Northbound interface that has influence to the terminal 20, without disclosing the fixed identifier to the external application. That is, it is possible to improve the security related to subscriber identifiers in the network.

The control unit may obtain a fixed identifier of a subscriber, based on the communication from the terminal or the IP address, and may assign the temporary identifier corresponding to the fixed identifier of the subscriber. According to the above configuration, by introducing a temporary identifier corresponding to a terminal 20 in an interface to the system outside, the network node 30 can enable the terminal 20 to be managed within an external application, and enable the external application to access the Northbound interface that has influence to the terminal 20, without disclosing the fixed identifier to the external application.

The control unit may assign a plurality of different temporary identifiers corresponding to the fixed identifier of the same subscriber. According to the above configuration, by introducing a plurality of temporary identifiers corresponding to a terminal 20 in an interface to the system outside, the network node 30 can enable the terminal 20 to be managed within an external application, and enable the external application to access the Northbound interface that has influence to the terminal 20, without disclosing the fixed identifier to the external application.

In a case where the reception unit receives the communication from the terminal, the transmission unit may transmit information indicating the temporary identifier to the terminal; in a case where the reception unit receives the information indicating the IP address, the control unit may establish a secure communication path to the terminal and the transmission unit may transmit, to the terminal, the temporary identifier and information indicating an identifier of the external application; or in a case where the reception unit receives the information indicating the IP address, the control unit may establish a secure communication path to the terminal, the reception unit may receive an assignment request of the temporary identifier from the terminal, and, in response to the assignment request, the transmission unit may transmit, to the terminal, the temporary identifier and the information indicating the identifier of the external application. According to the above configuration, by introducing a temporary identifier corresponding to a terminal 20 in an interface to the system outside, the network node 30 can enable the terminal 20 to be managed within an external application, and enable the external application to access the Northbound interface that has influence to the terminal 20, without disclosing the fixed identifier to the external application.

In a case where the reception unit receives the information indicating the IP address, the transmission unit may transmit, to the terminal, a message for triggering establishment of a secure communication path to the terminal. According to the above configuration, by introducing a temporary identifier corresponding to a terminal 20 in an interface to the system outside, the network node 30 can enable the terminal 20 to be managed within an external application, and enable the external application to access the Northbound interface that has influence to the terminal 20, without disclosing the fixed identifier to the external application.

In addition, according to an embodiment of the present invention, a communication method performed by a network node is provided. The communication method includes: receiving communication from an authenticated terminal, or receiving an IP (Internet Protocol) address of a terminal from an external application; assigning a temporary identifier for uniquely identifying the terminal communication method performed by a in an external interface, based on the communication from the terminal or the IP address; and transmitting information indicating the temporary identifier to the terminal or to the external application.

According to the above configuration, by introducing a temporary identifier corresponding to a terminal 20 in an interface to the system outside, the network node 30 can enable the terminal 20 to be managed within an external application, and enable the external application to access the Northbound interface that has influence to the terminal 20, without disclosing the fixed identifier to the external application. That is, it is possible to improve the security related to subscriber identifiers in the network.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, each of the network node 30 and the terminal 20 has been described by using functional block diagrams. However, the apparatuses may be implemented by hardware, software, or a combination of hardware and software. The software executed by a processor included in the network node 30 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the network node 30 in the present specification, may be performed by an upper node in some cases. In a network including one or more network nodes including the network node 30, it is apparent that various operations performed for communicating with the terminal 20 may be performed by at least one of the network node 30 and another network node other than the network node 30 (for example, but not limited to, MME or S-GW). According to the above, a case is described in which there is another single network node other than the network node 30. However, the other network node may be a combination of multiple other network nodes (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, a function of the network node 30 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, in a case where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Note that the Northbound interface in the present disclosure is an example of an external interface. AF is an example of an external application. NA-GUTI is an example of a temporary identifier. SUPI is an example of a fixed identifier of a subscriber.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
30 Network node
1001 Processor
1002 Storage apparatus
1003 Auxiliary storage apparatus
1004 Communication apparatus
1005 Input apparatus
1006 Output device

## Claims

1. A network node comprising:
a reception unit configured to receive communication from an authenticated terminal, or to receive information indicating an IP (Internet Protocol) address of a terminal from an external application;
a control unit configured to assign a temporary identifier for uniquely identifying the terminal in an external interface, based on the communication from the terminal or the IP address; and
a transmission unit configured to transmit information indicating the temporary identifier to the terminal or to the external application.

2. The network node as claimed in claim 1, wherein
the control unit obtains a fixed identifier of a subscriber, based on the communication from the terminal or the IP address, and assigns the temporary identifier corresponding to the fixed identifier of the subscriber.

3. The network node as claimed in claim 2, wherein
the control unit assigns a plurality of different temporary identifiers corresponding to the fixed identifier of the same subscriber.

4. The network node as claimed in claim 1, wherein
in a case where the reception unit receives the communication from the terminal, the transmission unit transmits the information indicating the temporary identifier to the terminal,
in a case where the reception unit receives the information indicating the IP address, the control unit establishes a secure communication path to the terminal, and the transmission unit transmits the temporary identifier and information indicating an identifier of the external application to the terminal, or
in a case where the reception unit receives the information indicating the IP address, the control unit establishes a secure communication path to the terminal, the reception unit receives an assignment request for the temporary identifier, and, in response to the assignment request, the transmission unit transmits the temporary identifier and the information indicating the identifier of the external application.

5. The network node as claimed in claim 4, wherein
in a case where the reception unit receives the information indicating the IP address, the transmission unit transmits, to the terminal, a message for triggering establishment of the secure communication path to the terminal.

6. A communication method performed by a network node, the communication method comprising:
receiving communication from an authenticated terminal, or receiving information indicating an IP (Internet Protocol) address of a terminal from an external application;
assigning a temporary identifier for uniquely identifying the terminal in an external interface, based on the communication from the terminal or the IP address; and
transmitting information indicating the temporary identifier to the terminal or to the external application.
